# EUROPEAN PATENT APPLICATION

(11) **EP 4 631 346 A1**
(43) Date of publication of application: **15.10.2025**
(21) Application number: 25169865.0
(22) Date of filing: 10.04.2025
(51) Int. Cl.: A01F 15/08, A01F 15/07

(54) **SYSTEMS AND METHODS FOR REDUCING PLUGGING OF ROUND BALERS**

(30) Priority: 12.04.2024 US 202463633377 P
(71) Applicant: Vermeer Manufacturing Company, Pella, IA 50219 (US)
(72) Inventor: THORESON, Kent P., Pella, 50219 (US); BURNS, Gary J., Pella, 50219 (US)
(74) Representative: Worthington, Richard Easton

(57) **Abstract**

Systems and methods for reducing plugging of a round baler that is towed or self-propelled are disclosed. The systems and methods comprise using one or more sensors to monitor operation of the round baler, where the one or more sensors are selected from the group consisting of speed sensors, torque sensors and pressure sensors. A control system controls operation of the round baler based on data received from the one or more sensors. The controller is configured to control a belt tightener system to dynamically control the tension in one or more bale forming belts during baler operation in response to data received from the one or more sensors to thereby avoid the baler from being plugged by the crop material.

## Description

### CROSS-REFERENCE TO RELATED APPLICATIONS

The present application claims the benefit of U.S. Provisional Patent Application No. 63/633,377, filed April 12, 2024, which is incorporated herein by reference in its entirety.

### DISCUSSION OF ART

The field of the disclosure relates generally to a baling machine, and, more particularly, to systems and methods for reducing plugging in a round baler.

Round balers have become an integral part of the agricultural industry and a variety of different types of balers are currently in use. Round balers may be towed by a pull vehicle, such as a tractor, or may be self-propelled vehicles. Round balers use one or more belts and rollers that define a bale formation chamber. During use, crop material is directed into the bale formation chamber. The one or more belts and rollers serve to compress the crop material in the formation chamber to form a round bale. At least some round balers known in the art may plug when a large amount of crop material and/or an uneven distribution of crop material is directed into the bale formation chamber.

The processes for avoiding and/or removing a plug in a round baler may be time consuming and inefficient. For example, to avoid round baler plugging, the round baler may be operated at a slower ground speed to reduce the amount of crop material concurrently fed into the bale formation chamber and reduce the likelihood of plugging. To remove plugging that has occurred, the crop material causing the plugging may be removed manually. In order to manually unplug the baler, the baler must be powered down by an operator or otherwise disengaged in order to safely remove the crop material causing the plugging. Such manually achieved unplugging produces inefficiencies caused by the required period of time when the baler is not being utilized to form bales.

Thus, there is a need for systems and methods to reduce plugging in a round baler and thereby increase the operating efficiencies of round balers.

### SUMMARY

In one aspect, a round baler for forming round bales of a crop material is disclosed where the round baler comprises: a crop pickup device; one or more rollers and one or more bale forming belts, the one or more rollers and one or more bale forming belts defining a bale formation chamber, the crop pickup device directing crop material through a crop inlet and into the bale formation chamber to form the round bale of crop material; a belt drive system to move the one or more rollers and thereby move the one or more bale forming belts; a belt tightener system for modifying the tension in the one or more bale forming belts; one or more speed sensors, for monitoring operation of the round baler; and a control system that controls operation of the round baler based on data received from the one or more speed sensors, the control system comprising: a controller configured to control the belt tightener system to dynamically control the tension in one or more bale forming belts during baler operation in response to received speed sensor data to thereby avoid the baler from being plugged by the crop material.

In another aspect, a round baler for forming round bales of a crop material, the round baler comprises: a crop pickup device; one or more rollers and one or more bale forming belts, the one or more rollers and one or more bale forming belts defining a bale formation chamber, the crop pickup device directing crop material through a crop inlet and into the bale formation chamber to form the round bale of crop material; one or more sensors for monitoring the operation of the round baler, the one or more sensors selected from the group consisting of speed sensors, torque sensors and pressure sensors; and a control system that controls operation of the round baler based on data received from the one or more sensors, the control system comprising: a controller configured to dynamically control the belt tightener system to adjust the tension in one or more bale forming belts during baler operation in response to data received from the one or more sensors to thereby avoid the baler from being plugged by the crop material.

**In** yet another embodiment a method for preventing crop material from plugging a round baler that comprises: a crop pickup device; one or more rollers and one or more bale forming belts, the one or more rollers and one or more bale forming belts defining a bale formation chamber, the crop pickup device directing crop material through a crop inlet and into the bale formation chamber to form the round bale of crop material; one or more sensors for monitoring operation of the round baler; and a control system that controls operation of the round baler based on data received from the one or more sensors, the control system comprising: a controller configured to control the belt tightener system to dynamically modify the tension in one or more bale forming belts in response to the data received from the one or more sensors to thereby prevent the baler from being plugged by the crop material, the method comprising: determining if the received data is outside of a predetermined range; and if the received data is outside a predetermined range, dynamically modifying the tension in the one or more bale forming belts to prevent plugging in the round baler.

In another aspect, a round baler for forming round bales of a crop material is disclosed, where the round baler comprises: a crop pickup device; a plurality of rollers including at least one drive roller; one or more bale forming belts contacting the plurality of rollers, the one or more bale forming belts and the plurality of rollers defining a bale formation chamber, wherein the crop pickup device directs the crop material through a crop inlet and into the bale formation chamber to form the round bale of the crop material; a drive system including: a component configured to move the crop pickup device, and a belt drive system to move the at least one drive roller and thereby move the one or more bale forming belts; a belt tightener system for modifying tension in the one or more bale forming belts; one or more sensors for monitoring a parameter indicative of a load on the drive system; and a control system that controls operation of the belt tightener system based on load data received from the one or more sensors, the control system comprising a controller configured to dynamically control the belt tightener system to modify the tension in one or more bale forming belts during operation in response to the data received from the one or more sensors to thereby prevent a plug formation event from occurring.

In an additional aspect, a round baler for forming round bales of a crop material is disclosed, where the round baler comprises: a crop pickup device; one or more rollers and one or more bale forming belts, the one or more rollers and the one or more bale forming belts defining a bale formation chamber, wherein the crop pickup device directs crop material through a crop inlet and into the bale formation chamber to form the round bale of crop material; one or more sensors for monitoring operation of the round baler, the one or more sensors selected from the group consisting of speed sensors, torque sensors and pressure sensors; and a control system that controls operation of a belt tightener system including at least one of the one or more rollers based on data received from the one or more sensors, the control system comprising a controller configured to dynamically control the one or more bale forming belts to adjust tension during operation in response to the data received from the one or more sensors to thereby prevent a plug formation event from occurring.

In another aspect, a method for preventing a plug formation event from occurring in a round baler is disclosed, where the method comprises: directing crop material through a crop inlet of the round baler, into a bale formation chamber, the round baler including: a crop pickup device; one or more rollers and one or more bale forming belts, the one or more rollers and the one or more bale forming belts defining the bale formation chamber; a belt tightener system configured to adjust a tension on the one or more bale forming belts; one or more sensors for monitoring operation of the round baler; and a control system that controls the tensions of the one or more bale forming belts of the round baler based on data received from the one or more sensors; and in response to determining the received data from the one or more sensors is outside a predetermined threshold value, dynamically modifying, via a controller of the control system, the tension in the one or more bale forming belts to prevent the plug formation event from occurring.

### BRIEF DESCRIPTION OF THE DRAWINGS

The following drawings form part of the present specification, and are included to further demonstrate certain aspects of the present disclosure. The disclosure may be better understood by reference to one or more of these drawings in combination with the detailed description of specific embodiments presented herein.
FIG. 1 is a perspective view of one embodiment of a round baler.
FIG. 2 is a perspective view of the round baler shown in FIG. 1.
FIG. 3 is a side view of the round baler shown in FIG. 1.
FIG. 4 is a perspective view of another embodiment of a round baler.
FIG. 5 is a perspective view of the round baler shown in FIG. 4.
FIG. 6 is a side view of the round baler shown in FIG. 4.
FIG. 7 is a schematic of a control system for use with the round baler shown in FIG. 1.
FIG. 8 is a schematic of a control system for use with the round baler shown in FIG. 4.
FIGS. 9A-9D are graphical representations of operation parameters of a round baler, that represent the change in discrete operating parameters over time for a prior art round baler.
FIGS. 10A-10D are graphical representations of operation parameters of a round baler including a control system, that represent the change in discrete operating parameters over time for a round baler of the present disclosure.

Corresponding reference characters indicate corresponding parts throughout the several views of the drawings. Although specific features of various examples may be shown in some drawings and not in others, this is for convenience only. Any feature of any drawing may be referenced or claimed in combination with any feature of any other drawing.

### DETAILED DESCRIPTION

There is a need for systems and methods to reduce plugging in a round baler to increase the operating efficiency of the round baler.

When introducing elements of various embodiments disclosed herein, the articles "a", "an", "the", and "said" are intended to mean that there are one or more of the elements. The terms "comprising", "including", and "having" are intended to be inclusive and mean that there may be additional elements other than the listed elements.

Unless otherwise indicated, approximating language, such as "generally", "substantially", and "about", as used herein indicates that the term so modified may apply to only an approximate degree, as would be recognized by one of ordinary skill in the art, rather than to an absolute or perfect degree. Accordingly, a value modified by a term or terms such as "about", "approximately", and "substantially" is not to be limited to the precise value specified. In at least some instances, the approximating language may correspond to the precision of an instrument for measuring the value. Additionally, unless otherwise indicated, the terms "first", "second", etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

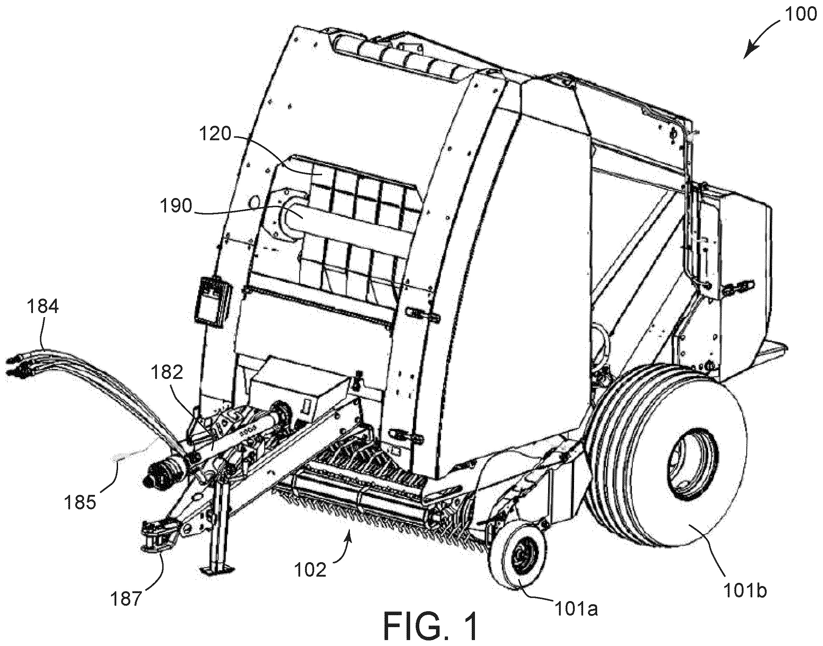

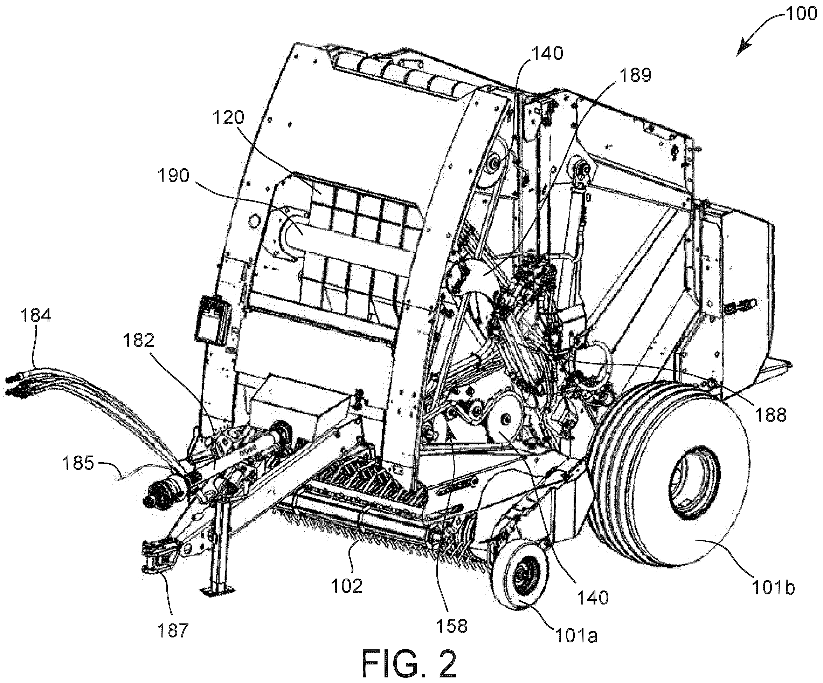

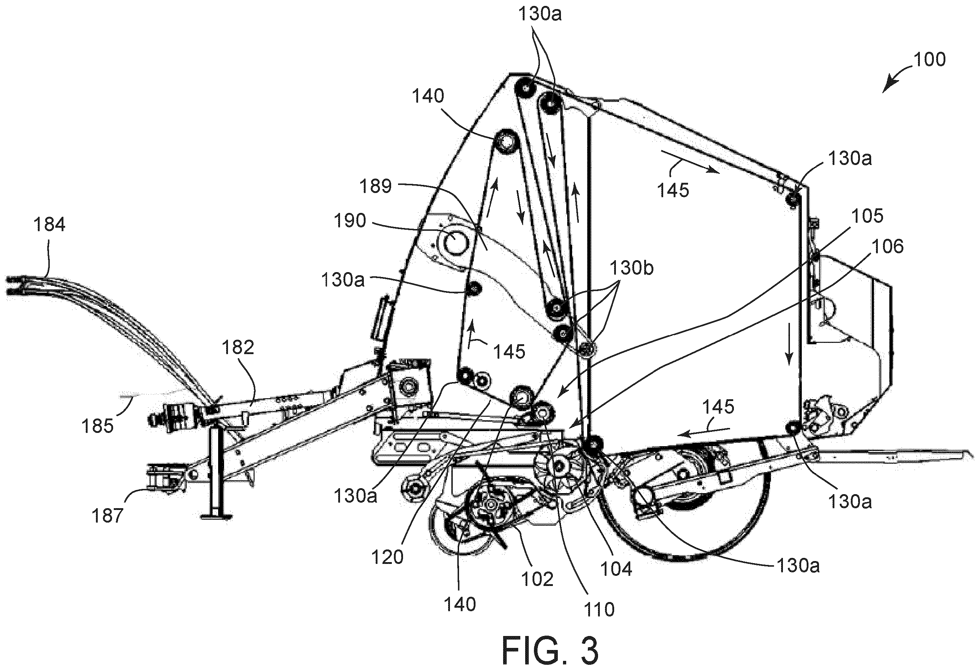

FIGS. 1 and 2 are side perspective views of a round baler 100 that is towed behind a vehicle. The towing vehicle is not shown in the FIGS. 1 and 2. FIG. 3 is a side view of the round baler 100 shown in FIGS. 1 and 2 with at least a portion of the components removed for clarity and visibility. Turning to FIG. 3, the round baler 100 includes a crop pickup device 102, a crop feeding device 104, and a bale formation chamber 105. In FIG. 3, front and rear wheels 101a, 101b respectively are removed along with a portion of the housing of baler 100 to more clearly show the crop pickup device 102 and the crop feeding device 104. The crop feeding device 104 moves crop material through a crop inlet 106 to the bale formation chamber 105. The bale formation chamber 105 (see, FIG. 3) is adjacent the crop inlet 106 and is defined by a throat roller 110, one or more bale forming belts 120, a plurality of idler rollers 130 (such as one or more stationary idler rollers 130a and/or one or more belt tightening idler rollers 130b), and a plurality of belt drive rollers 140. Bale formation chamber 105 is variable in size, depending on the bale size and/or the amount of crop material added to the bale formation chamber 105 during operation of round baler 100. The throat roller 110 directs crop material toward the interior of the bale formation chamber 105 from belt path 145 and assists in causing a bale to form. The one or more bale forming belts 120 move along a belt path 145 creating and/or defining a portion of the bale formation chamber 105. The movement of the bale forming belts 120 in conjunction with other components of the bale formation chamber 105 enables the formation of a round bale of crop material to form within the formation chamber 105.

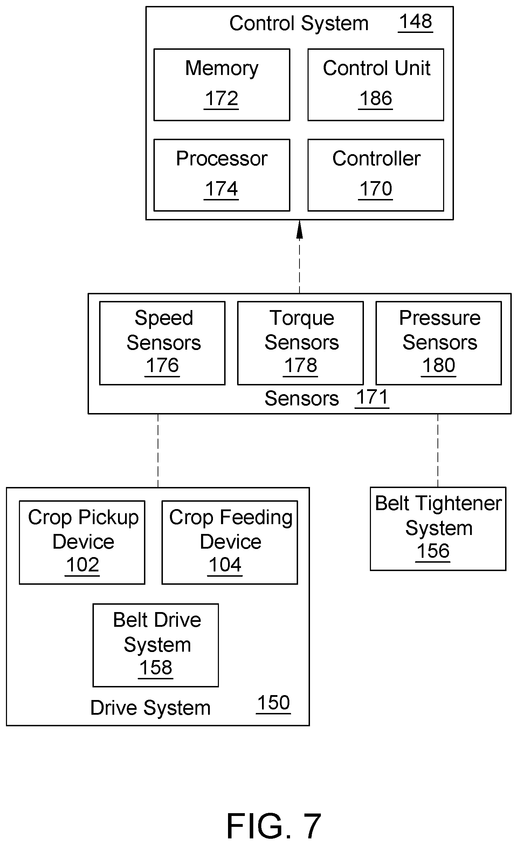

The round baler 100 includes a control system 148 (represented schematically in FIG. 7), a drive system 150 (represented schematically in FIG. 7), and a belt tightener system 156 (represented schematically in FIG. 7). Drive system 150 includes a belt drive system 158, crop pickup device 102, and crop feed device 104. The drive system 150 includes a driveline 182 through which mechanical power is provided from the vehicle towing the round baler 100 to the crop pickup device 102, the crop feeding device 104, and/or the belt drive system 158 to move the one or more bale forming belts 120 of the bale formation chamber 105. The belt drive system 158 transfers power from the towing vehicle to the bale forming belts 120 and may comprise a driveline, shafts, gearbox, sprockets, chains, and belt drive rollers 140. The drive system 150 may include one or more hydraulic lines 184 and/or one or more electrical lines 185 to connect the round baler 100 and the vehicle towing the round baler 100. Power may be distributed from a component (e.g., the driveline 182) to the baler components (e.g.; the crop pickup device 102, the crop feeding device 104, and/or the bale forming belts 120) by gearboxes, sprockets, chains, clutches, and/or other drive components. Similarly, power from the hydraulic lines 184 and electrical lines 185 may be distributed through discrete/dedicated hydraulic components (valves, hoses, actuators, etc.) or electrical components (circuitry, fuses, wires, etc. ) to actuators and/or sensors on the round baler 100. The round baler 100 may be coupled to the vehicle towing the round baler 100 by a hitch 187. The belt tightener system 156 includes an actuator 188, an arm 189, the one or more belt tightening idler rollers 130b, and an arm pivot 190. The belt tightener system may be powered by the electrical and/or hydraulic system from the vehicle towing the round baler 100 or, in some configurations, the belt tightener system 156, specifically actuator 188, may be configured with a closed loop hydraulic system having a controllable valve for adjusting hydraulic pressure. During bale formation, the actuator 188 uses hydraulic pressure and a hydraulic valve system to resist movement of the arm 189 about the arm pivot 190 to adjust a tightness of the one or more bale forming belts 120 which at least partially wrap around the one or more belt tightening idler rollers 130b. The hydraulic valve system of the belt tightener system 156 may be powered by electrical lines 185 and controlled by control system 148. As the term "operating" or "in operation" specifically used herein, the round baler shall be deemed to be "operating" or in "operation" when the baler is forming a bale and/or when the belts are being driven by the drive system 158. When the baler is operating, the one or more bale forming belts are moving as required to form a bale within the bale formation chamber.

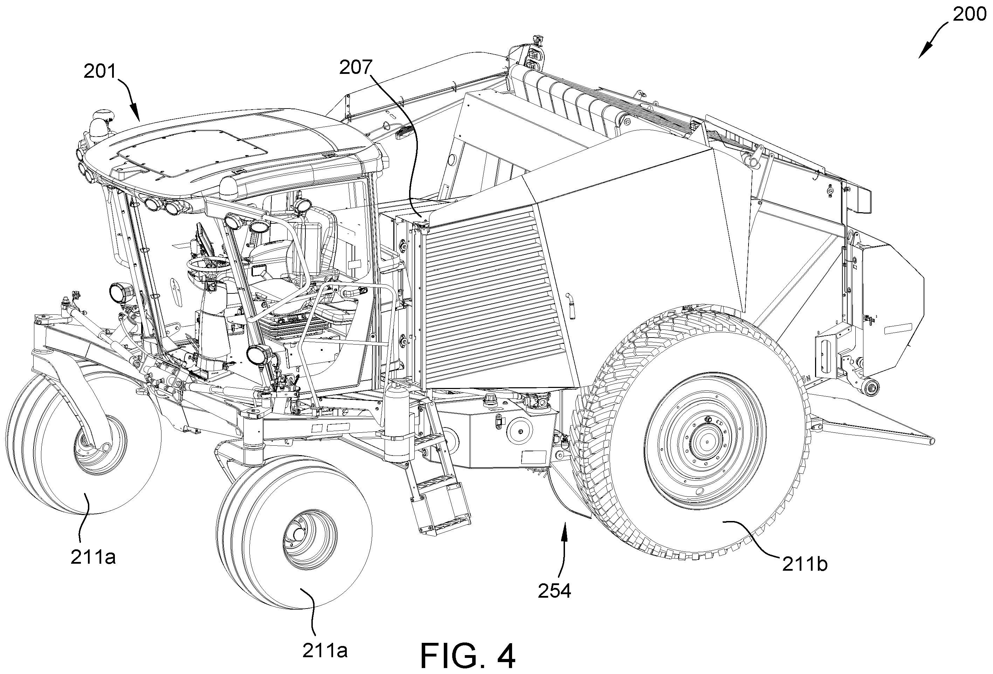

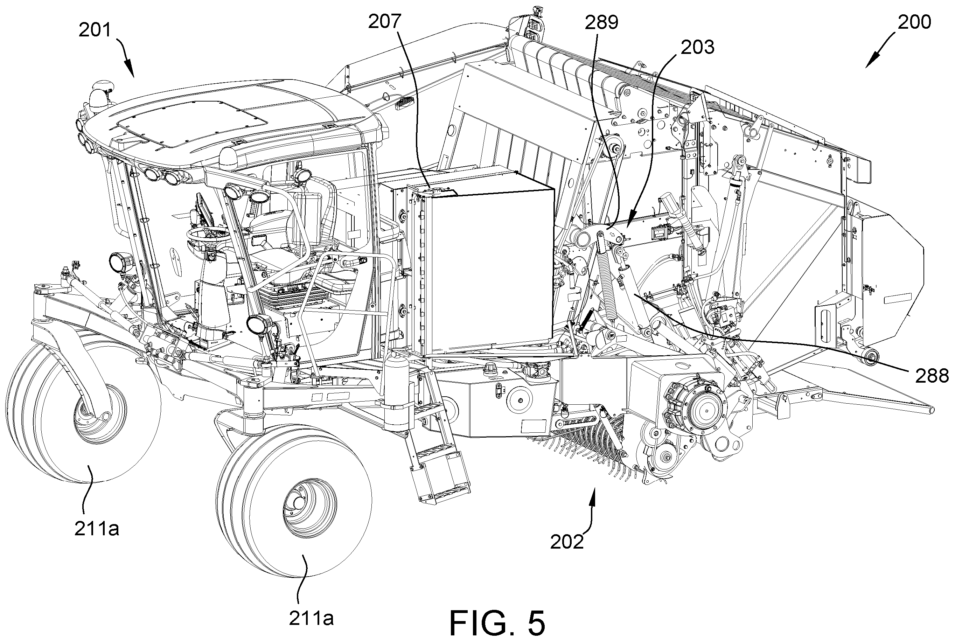

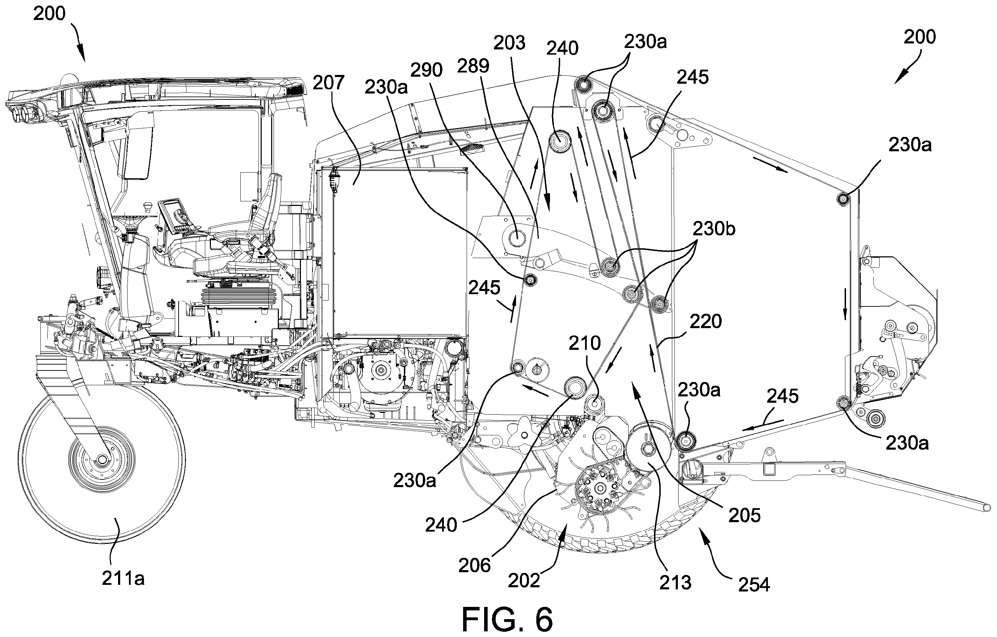

FIGS. 4 and 5 are perspective views of a round baler 200 that is a self-propelled vehicle. FIG. 6 is a side view of the round baler 200 with at least a portion of the components removed for clarity and visibility. The round baler 200 includes front wheels 211a and rear wheels 211b. The round baler 200 includes a cab 201, a crop pickup device 202, a belt tightener system 203, and a bale formation chamber 205 (see, FIG. 6). In FIGS. 5 and 6 the rear wheel 211b is removed in order to better show the crop pickup device 202 and the bale formation chamber 205. As shown in FIG. 6, the crop pickup device 202 directs crop material through a crop inlet 206 and into the bale formation chamber 205. The bale formation chamber 205 is adjacent the crop inlet 206. The bale formation chamber 205 is defined by a throat roller 210, one or more bale forming belts 220, drum roller 213, a plurality of idler rollers 230 (such as one or more stationary idler rollers 230a and/or one or more belt tightening idler rollers 230b), and a plurality of belt drive rollers 240. Bale formation chamber 205 is variable in size, depending on the bale size and/or the amount of crop material added to the bale formation chamber 205 during operation of round baler 200. Drum roller 213 assists in propelling crop material entering the formation chamber 205 and rotating the bale. That is, and in some embodiments, the round baler does not include a crop feeding device. Rather, in embodiments, round balers can include alternative components, such as drum roller 213, for propelling crop material into formation chamber 205, as discussed herein. The throat roller 210 directs crop material toward the interior of the bale formation chamber 205 from belt path 245 and assists in causing a bale to form. The one or more bale forming belts 220 move along a belt path 245 creating and/or defining a portion of the bale formation chamber 205. The movement of the bale forming belts 220 in conjunction with other components of the bale formation chamber 205 enables the formation of the round bale of crop material within the formation chamber 205.

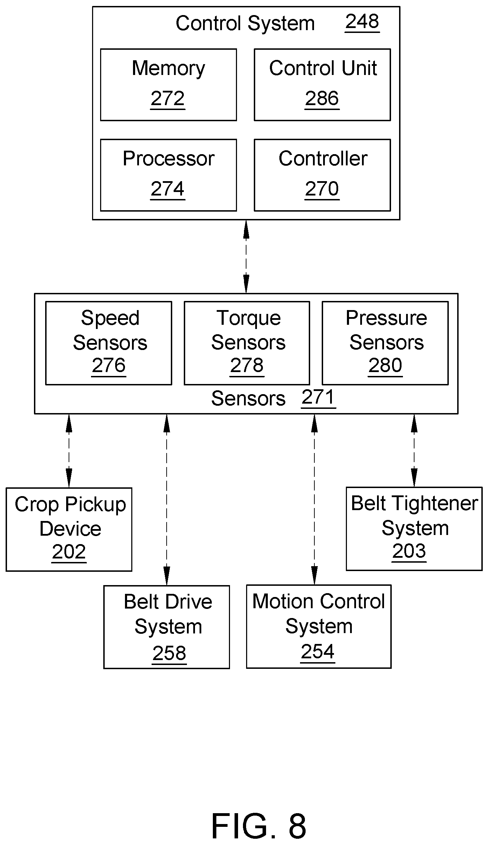

The round baler 200 includes a control system 248 (schematically represented in FIG. 8). The round baler also includes a motion control system 254 (schematically represented in FIG. 8) that controls the ground movement of the round baler 200. A component, such as a power source 207, (e.g., an engine) shown in FIG. 6 is mechanically, hydraulically and/or electrically connected to the baler 200 to provide power to various components of the round baler 200 (such as the motion control system 254, the crop pickup device 202, the belt tightener system 203, the bale formation chamber 205 via a belt drive system 258 (schematically represented in FIG. 8) and the belt tightener system 203) through individual motors and/or actuators. The belt drive system 258 moves the one or more bale forming belts 220 by transferring power from the power source 207 to the baler form belts 220. The belt drive system 258 may comprise drivelines, shafts, chains, belt drive rollers, and hydraulic motors. The control system 248 controls the components of the round baler 200 individually. The control system 248 is communicatively coupled to the motion control system 254, the crop pickup device 202, the belt tightener system 203, and the belt drive system 258 to move the one or more bale forming belts 220. The belt tightener system 203 includes an actuator 288, an arm 289, the one or more belt tightening idler rollers 230b, and an arm pivot 290. The actuator may comprise a hydraulic actuator with associated hydraulic valving that may be used to control the hydraulic pressure within the actuator 288. The hydraulic valve may be connected to a valve control system. The belt tightener system 203 may be powered by the electrical and/or hydraulic system from power source 207, or, in some configurations, the belt tightener system 203, specifically actuator 288 may be configured with a closed loop hydraulic system having a controllable valve for adjusting hydraulic pressure. During bale formation, the actuator 288 uses hydraulic pressure to resist movement of the arm 289 about the arm pivot 290 to adjust a tightness of the one or more bale forming belts 220 which at least partially wrap around the one or more belt tightening idler rollers 230b. The hydraulic valve system of the belt tightener system 203 may be powered by electrical lines and controlled by control system 248.

FIG. 7 is a schematic of the control system 148 for use with a round baler, such as the round baler 100 that is towed behind a vehicle. The control system 148 includes a controller 170 and is in communication with sensors 171 communicatively coupled to the crop pickup device 102, the crop feeding device 104, the belt drive system 158, and/or the belt tightener system 156, via the electrical lines 185 (see, FIGS. 1-3). The control system 148 also includes a memory 172 and a processor 174. The memory 172 may be any device allowing information such as executable instructions and/or data to be stored and retrieved. The processor 174 may include one or more processing units to retrieve and execute instructions and/or data stored by the memory 172.

The control system 148 may use signals and/or data received from the plurality of sensors to control the round baler 100. The plurality of sensors may include, but is not limited to, one or more speed sensors 176, and/or one or more torque sensors 178, and/or one or more pressure sensors 180. The control system 148 may also receive and/or send signals via a remote server (not shown in Figures). During operation of the baler, such as during bale formation, the tension in the one or more bale forming belts (e.g., bale forming belts 120) is dynamically controlled by the control system. As used herein, "dynamically controlled" or "dynamic control" means increasing or decreasing the tension in the one or more bale forming belts during operation of the round baler 100 based on the data received by the controller from the one or more sensors 171, and without intervention by the baler operator. By dynamically controlling the tension in one or more bale forming belts, the tension is modified by the controller, independent of interaction from the baler operator when the round baler is operating. Additionally, or alternatively, the baler operator may manually adjust (e.g., increase or decrease) the load settings, which in turn adjusts the command belt tension during operation. As a result the system of the present disclosure increases or decrease belt tension without the need for the operator to stop baler operation, make component adjustments, remove collected crop material, etc. The tension is dynamically controlled when the baler tailgate is closed.

The controller 170 may receive speed data as related to various components of the round baler 100 from the one or more speed sensors 176. For example, one or more speed sensors 176 may be positioned on or proximate to the driveline 182 and/or the bale formation chamber 105 (such as through the rotational speed of a component of belt drive system 158 and/or rollers 130a and/or 130b) to determine the speed of the one or more bale forming belts 120 along the belt path 145 as powered by the belt drive system 158. In some embodiments, one or more speed sensors 176 may be positioned on, or proximate to, the one or more bale forming belts 120. In other embodiments, one or more speed sensors 176 may be positioned on, or proximate to, one or more of the plurality of belt drive rollers 140 to measure the rotational speed of the belt drive roller 140, thereby measuring the speed of the belts 120. In still other embodiments, one or more speed sensors 176 may be positioned on or proximate to the crop pickup device 102, the crop feeding device 104, and/or belt drive system 158, for example, on a drive component such as a shaft, clutch, and/or gearbox.

The controller 170 may receive torque data as related to various components of the round baler 100 from the one or more torque sensors 178. For example, one or more torque sensors 178 may be positioned on or proximate to the belt drive system 158, the crop pickup device 102, and/or the crop feeding device 104.

The controller 170 may receive pressure data as related to various components of the round baler 100 from the one or more pressure sensors 180. For example, in configurations where the drive system 150 is hydraulically powered, one or more pressure sensors 180 may be positioned on or proximate to the hydraulic system of the drive system 150 to determine the load of crop material being fed into and/or being formed into a bale by the round baler 100. For example, one or more pressure sensors 180 may be positioned on or proximate to hydraulic connections of one or more components of the belt drive system 158 (such as, but not limited to, the hydraulic lines 184) to determine the hydraulic pressure on the belt drive system. Additionally, or alternatively, for example, one or more pressure sensors 180 may be positioned on or proximate to the actuator 188 to determine the hydraulic pressure of the belt tightener system 156. The belt tightener system 156 may include a hydraulic valve (not shown in Figures) controlled by the controller 170 to enable changes in the hydraulic pressure within the actuator 188, thereby enabling changes to the tension of the one or more bale forming belts 120.

The controller 170 may control the round baler 100 based on data received from the one or more speed sensors 176, the one or more torque sensors 178, and/or the one or more pressure sensors 180. For example, the controller 170 may dynamically controls the belt tightener system 156 while round baler 100 is operating to control the tensioning of the one or more bale forming belts 120 based on the received sensor data and one or more threshold values and/or ranges stored in the memory 172. The tension of the one or more bale forming belts 120 may be adjusted (e.g., increased or decreased) based on receiving sensor data that is compared to a threshold speed, torque, and/or pressure value and/or range representing an operation baseline for a load on at least one component of the drive system 150 and/or the driveline 182 to facilitate avoiding a plug of crop material from forming as the crop material enters and/or moves within the bale formation chamber 105.

The round baler 100 is configured for operation under active control by an operator (e.g., a user). Active control of the round baler 100 may be executed via a control unit 186 positioned on the round baler 100. The control unit 186 may include a display and/or a user interface. Additionally, the controller 170 may be configured to autonomously control one or more operations of the round baler 100. Automated control of the round baler 100 may also be executed via instructions received from an external server.

The processor 174 may cause the controller 170 to adjust the tension of the one or more bale forming belts 120 using the belt tightener system 156 based on received sensor data. Specifically, the processor 174 may determine a threshold speed, torque, load, and/or pressure value and/or range has been crossed (e.g., by receiving sensor data above or below the threshold value and/or range). The controller is configured to control the belt tightener system to adjust the tension in one or more bale forming belts in response to received sensor data, namely speed, torque or pressure sensor data that is outside of a defined threshold operating range and indicative of a plug forming in the round baler. For example, in an exemplary embodiment, during baler operation, specifically, bale formation, the processor 174 may determine a speed of the one or more bale forming belts 120 is below a threshold speed value and/or range, signifying that loading of the belts is increasing, implying that a plug of crop material may form and/or has started to form. In response, the processor 174 may cause the controller 170 to reduce the tension of the one or more bale forming belts 120 using the belt tightener system 156. That is, the control system 148 may reduce the tension of the one or more bale forming belts 120 without operator input and/or action, based solely on sensor data received by the processor 174, if the speed of the one or more bale forming belts 120 is below a threshold speed value and/or range as stored in the memory 172. In the illustrated example, the reduction or increase in the tension of the one or more bale forming belts is achieved by the controller commanding a reduction or increase in the hydraulic pressure within actuator 188, thereby reducing or increasing the force applied by actuator 188.

Additionally, for example, in the exemplary embodiment, the processor 174 may monitor the speed of the one of more bale forming belts 120, such as through the rotational speed of a component of belt drive system 158 an/or rollers 130a and/or 130b. to determine when the speed is back above the threshold speed value and/or range, signifying that belt loading due to crop material has reduced, thereby a plug of crop material has been avoided and/or mitigated. In response, the processor 174 may cause the controller 170 to increase the tension of the one or more bale forming belts 120 using the belt tightener system 156. That is, the control system 148 may increase the tension of the one or more bale forming belts 120 as the bale formation process continues, i.e., the belt drive system continues to drive/move the belts, without operator input and/or action, based solely on sensor data received by the processor 174, if the speed of the one or more bale forming belts 120 is back above a threshold speed value and/or range as stored in the memory 172.

The tension of the one or more bale forming belts 120 may be dynamically controlled using the belt tightener system 156. That is, the tension may be monitored and/or adjusted by the controller 170 as sensor data is received by the processor 174 as the bale formation process continues to prevent a plug of crop material from forming without operator input and/or action. While the exemplary embodiment of a threshold speed value and/or range has been discussed, the use of a threshold value and/or range by the processor 174 to cause the controller 170 to change the tension of the one or more bale forming belts 120 may also be based on other speed, torque, and/or pressure data as described herein. For example, the controller 170 may change the tension of the one or more bale forming belts 120 based on a speed of the belt drive rollers 140, a torque on the belt drive rollers 140, a pressure on the crop feeding device 104, a pressure on one or more hydraulic connections of the drive system 150, and/or a pressure on the actuator 188 of the belt tightener system 156. Moreover, and in response to received sensor data, the ground speed of the round baler 100 remains continuous and/or constant while the controller 170 dynamically controls the tension of the one or more bale forming belts 120 during the bale formation process using the belt tightener system 156. Additionally, the belt drive system 158 and/or drive system 150 is continuously operated while the controller 170 dynamically controls the tension of the one or more bale forming belts 120 during the bale formation process.

The rate of change of the tension of the one or more bale forming belts 120 by the controller 170 may be based on a rate at which a commanded pressure of belt tightener actuator can be increased and/or decreased by the controller 170 and/or the reaction time of the hydraulic valving of the belt tightener system 156. The rate of decrease commanded pressure to the belt tightener actuator by the controller 170 may be less than, or significantly less than, the rate of commanded pressure increase by the controller 170. For example, the commanded pressure of the belt tightener actuator may be reduced at a rate of 100% per 1 second. Additionally, for example, the commanded pressure to the belt tightener actuator valve may be increased at a rate of 100% per 50 milliseconds. In some embodiments, an amount of commanded pressure to the belt tightener actuator valve by the controller 170 may be preset, such as, but not limited to, down to 2200 psi, 0 psi, or between 2200 psi and 0 psi. In other embodiments, the amount of tension decrease by the controller 170 may be adjustable by the operator of the round baler 100.

FIG. 8 is a schematic of the control system 248 for use with a round baler, such as the round baler 200 that is a self-propelled vehicle. The control system 248 includes a controller 270 and is in communication with sensors 271 communicatively coupled to the motion control system 254, the crop pickup device 202, the belt drive system 258, and/or the belt tightener system 203. The control system 248 also includes a memory 272 and a processor 274. The memory 272 may be any device allowing information such as executable instructions and/or data to be stored and retrieved. The processor 274 may include one or more processing units to retrieve and execute instructions and/or data stored by the memory 272.

The control system 248 may use signals received from the plurality of sensors to control the round baler 200. The plurality of sensors 271 may include, but is not limited to, one or more speed sensors 276, one or more torque sensors 278, and one or more pressure sensors 280. The control system 248 may also receive and/or send signals via a remote server (not shown in Figures).

The controller 270 may receive speed data as related to various components of the round baler 200 from the one or more speed sensors 276. For example, one or more speed sensors 276 may be positioned on or proximate to the motion control system 254, such as wheels, shafts, and/or motors, to determine the ground speed of the round baler 200. Additionally, for example, one or more speed sensors 276 may be positioned to determine the speed of the one or more bale forming belts 220 along the belt path 245 as powered by the belt drive system 258. **In** some embodiments, one or more speed sensors 276 may be positioned on or proximate to the one or more bale forming belts 220. In other embodiments, one or more speed sensors 276 may be positioned on or proximate to a hydraulic drive motor or other components (such as chains, shafts, and/or sprockets) of the belt drive system 258 and/or one or more of the plurality of belt drive rollers 240. In still other embodiments, one or more speed sensors 276 may be positioned on or proximate to the crop pickup device 202, for example, on a drive component, such as a shaft, motor, and/or gearbox, of the crop pickup device 202.

The controller 270 may receive torque data as related to various components of the round baler 200 from the one or more torque sensors 278. For example, one or more torque sensors 278 may be positioned on or proximate to the motion control system 254 to determine the torque on a rotor, a driveshaft, and/or one or more gear components of the motion control system 254. Additionally, for example, one or more torque sensors 278 may be positioned on or proximate to the drive components of the belt drive system 258 (such as drive shafts, or one or more of the plurality of belt drive rollers 240) and/or the crop pickup device 202.

The controller 270 may receive pressure data as related to various components of the round baler 200 from the one or more pressure sensors 280. For example, in configurations where the crop feeding device is hydraulically powered, one or more pressure sensors 280 may be positioned on or proximate to the hydraulic system of the crop pickup device 202 to determine the load of crop material being received into the round baler 200 by the crop pickup device 202. Additionally, in configurations where the belt drive system 258 is hydraulically powered, one or more pressure sensors 280 may be positioned on or proximate to the belt drive system 258 to determine the hydraulic pressure being used by the belt drive system 258. Furthermore, one or more pressure sensors 280 may be positioned on or proximate to the actuator 288 to determine the hydraulic pressure of the belt tightener system 203. The belt tightener system 203 may include a hydraulic valve (not shown in Figures) controlled by the controller 270 to enable changes in the hydraulic pressure of the actuator 288, thereby enabling changes to the tension of the one or more bale forming belts 220.

The controller 270 may control the round baler 200 based on data received from the one or more speed sensors 276, the one or more torque sensors 278, and/or the one or more pressure sensors 280. For example, the controller 270 may dynamically control the belt tightener system 203 to control the tensioning of the one or more bale forming belts 220 during operation of round baler 200 and based on the received sensor data and one or more threshold values and/or ranges stored in the memory 272. The tension of the one or more bale forming belts 220 may be adjusted (e.g., increased or decreased) based on receiving sensor data that is compared to a threshold speed, torque, and/or pressure value and/or range representing an operation baseline for a load on the belt drive system 258 and/or the crop pickup device 202 to facilitate avoiding a plug of crop material from forming as the crop material enters and/or moves within the bale formation chamber 205.

Additionally, for example, the controller 270 may control the power provided to control the pickup speed of the crop pickup device 102 and/or the ground speed of the motion control system 254 based on the received sensor data. The pickup speed of the crop pickup device 102 and/or the ground speed of the motion control system 254 may be adjusted (e.g., increased or decreased) based on receiving sensor data that is compared to a threshold speed, torque, and/or pressure value and/or range representing an operation baseline for a load on the belt drive system 258 to facilitate avoiding a plug of crop material from forming as the crop material enters and/or moves within the bale formation chamber 205.

The round baler 200 is configured for operation under active control by an operator (e.g., a user). Active control of the round baler 200 may be executed via a control unit 286 positioned on the round baler 200. The control unit 286 may include a display and/or a user interface. Additionally, the controller 270 may be configured to autonomously control one or more operations of the round baler 200. Automated control of the round baler 200 may also be executed via instructions received from a remote server.

The processor 274 may cause the controller 270 to adjust the tension of the one or more bale forming belts 220 using the belt tightener system 203 based on received sensor data. Specifically, the processor 274 may determine a threshold speed, torque, load, and/or pressure value and/or range has been crossed (e.g., by receiving sensor data above or below the threshold value and/or range). For example, in an exemplary embodiment, the processor 274 may determine a load experienced and/or imparted on one or more bale forming belts 220 is above a threshold load value and/or range, signifying that a plug of crop material may form and/or has started to form. In response, the processor 274 may cause the controller 270 to reduce the tension of the one or more bale forming belts 220 using the belt tightener system 203. That is, the control system 248 may reduce the tension of the one or more bale forming belts 220 during bale formation process without operator input and/or action, based solely on sensor data received by the processor 274, if the load on the one or more bale forming belts 220 is above a threshold load value and/or outside of an acceptable range, as stored in the memory 272. In the illustrated example, the reduction, or alternatively an increase, in tension of the one or more bale forming belts is achieved by the controller commanding a reduction or increase in the hydraulic pressure within the actuator 288, thereby reducing or increasing the force applied by the actuator 288.

Additionally, for example, in the exemplary embodiment, the processor 274 may monitor the load of the one of more bale forming belts 220 such as through the rotational speed of a component belt drive system 258 and/or rollers 230a and/or 230b to determine when the load is below the threshold speed value and/or within the acceptable range, signifying that a plug of crop material has been avoided and/or mitigated. In response, the processor 274 may cause the controller 270 to increase the tension of the one or more bale forming belts 220 using the belt tightener system 203. That is, the control system 248 may increase the tension of the one or more bale forming belts 220 during the bale formation process without operator input and/or action, based solely on sensor data received by the processor 274, if the load of the one or more bale forming belts 220 is back below a threshold speed value and/or within the range as stored in the memory 272.

The tension of the one or more bale forming belts 220 may be dynamically controlled using the belt tightener system 203. That is, the tension may be monitored and/or adjusted by the controller 270 as sensor data is received by the processor 274 to maintain a movement speed of the motion control system 254 of the round baler 200 while preventing a plug of crop material from forming during the bale formation process and/or during operation of round baler 200, without operator input and/or action. While the exemplary embodiment of a threshold load value and/or range has been discussed, the use of a threshold value and/or range by the processor 274 to cause the controller 270 to change the tension of the one or more bale forming belts 220 may also be based on other speed, torque, and/or pressure data as described herein. For example, the processor 274 may cause the controller 270 to change the force applied by actuator 288 of the belt tightener system 203 (thereby changing tension of the one or more bale forming belts 220) based on a speed of the belt drive rollers 240, a torque on the motion control system 254, a torque on the belt drive rollers 240, a pressure on the crop pickup device 202, and/or a pressure on the belt drive system 258.

The controller 270 may dynamically control the tension of the one or more bale forming belts 220 during the bale formation process using the belt tightener system 203, without operator interaction or intervention, in response to received sensor data such that input and/or action from the operator of the round baler 200 is not needed, for example, the operator does not need to slow or stop the ground speed and shutdown the belt drive system of the round baler. That is, the ground speed of the baler remains continuous and/or constant while the controller 270 dynamically controls the tension of the one or more bale forming belts 220 during the bale formation process using the belt tightener system 203 in response to received sensor data. Additionally, the belt drive system 258 is continuously operated while the controller 270 dynamically controls the tension of the one or more bale forming belts 220 during the bale formation process. The rate at which the controller 270 reduces the tension of the one or more bale forming belts 220 in response to received sensor data indicating a potential crop material plug may differ from the rate at which the controller 270 increases the tension of the one or more bale forming belts 220 following the mitigation of a crop material plug.

The rate of change of the tension of the one or more bale forming belts 220 by the controller 270 may be based on a rate at which a commanded pressure of belt tightener actuator can be increased and/or decreased by the controller 270 and/or the reaction time of the hydraulic valving of the belt tightener system. The rate of decrease in commanded pressure to the belt tightener actuator by the controller 270 may be less than, or significantly less than, the rate of commanded pressure increase by the controller 270. For example, the commanded pressure of the belt tightener actuator valve may be reduced at a rate of 100% per 1 second. Additionally, for example, the commanded pressure to the belt tightener actuator valve may be increased at a rate of 100% per 50 milliseconds. In some embodiments, an amount of tension decrease by the controller 270 may be preset, such as, but not limited to, 2200 psi, 0 psi, or between 2200 psi and 0 psi. In other embodiments, the amount of tension decrease by the controller 270 may be adjustable by the operator of the round baler 200.

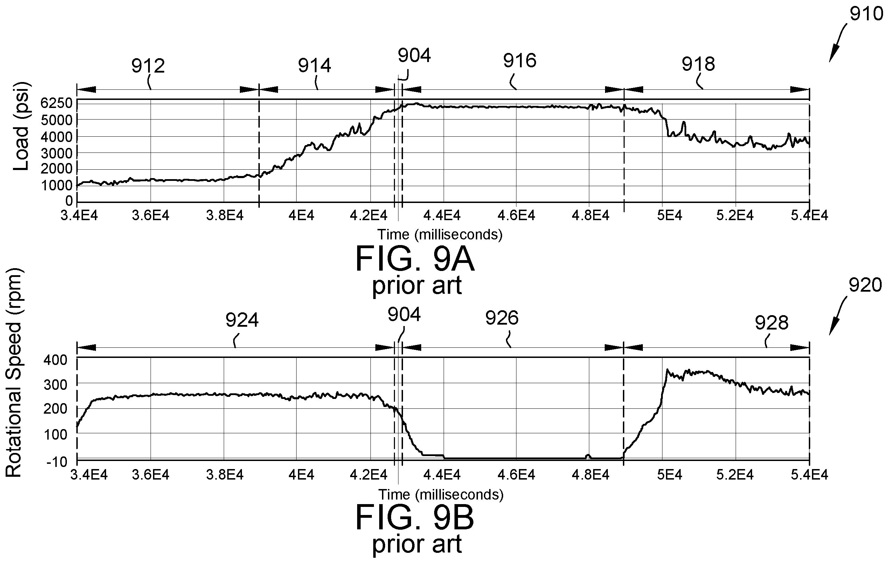

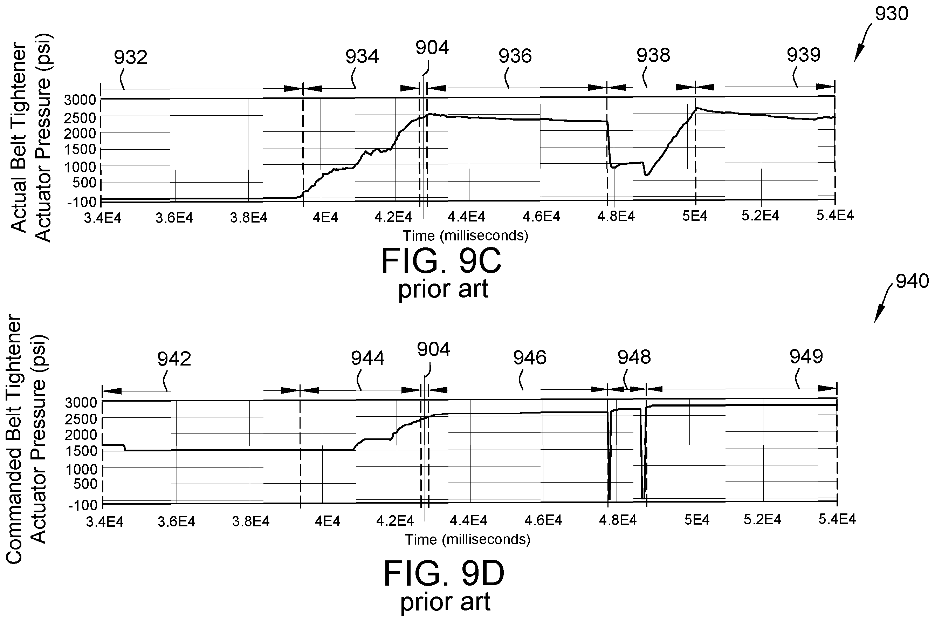

FIGS. 9A-9D are graphical representations of variable relationships illustrating operation parameters of a round baler not including a control system to adjust the tension of one or more bale forming belts (such as, but not limited to, the bale forming belts 120, 220) based on received sensor data to avoid a crop material plug from forming. That is, FIGS. 9A-9D are graphical representations of operation parameters of a round baler that does not include dynamic control of the tension of the bale forming belts, but rather requires reduced ground speed and/or manual unplugging after disengagement of the machine by an operator to remove a crop material plug following a plug formation event 904. When the machine is disengaged, the drive system is disengaged by the operator and the belts stop moving. The crop pickup and associated bale formation is also discontinued when the machine is disengaged. Furthermore, belt tension for the round baler represented in FIGS. 9A-9D is based on bale size, where belt tension of the bale forming belts is electrically controlled or mechanically induced due to the geometry of the rollers and belt tightener. For example, a controller of the round baler corresponding to FIGS. 9A-9D utilizes a low belt tension during bale start, (e.g., bale is less than 30 inches in diameter). During this period of low belt tension helps the bale get started (see, FIG. 9D). However, when the bale gets larger (e.g., greater than 30 inches), the belt tension/pressure will increase to create a high density bale. The variable relationships of FIGS. 9A-9D, including variable relationships 910 (shown in FIG. 9A), 920 (shown in FIG. 9B), 930 (shown in FIG. 9C), and 940 (shown in FIG. 9D), are graphical representations of different operation parameters of a round baler during the same period of time. That is, variable relationships 910, 920, 930, 940 occur over the same period of time, with the plug formation event 904 occurring at the same time for each variable relationship.

As shown in FIG. 9A, the variable relationship 910 illustrates a change in hydraulic pressure on a drive system component due to a load on a round baler (such as, but not limited to, the round baler 100, 200). The variable relationship 910 may include, but not limited to, relative stability 912, the time during which crop material is introduced into the baler to begin forming a bale, a gradual increase 914, the time during which the crop is fed into the baler up to the plug formation event 904, and a sustained high load 916, following the plug formation event 904. The sustained high load 916 correlates with the occurrence of the plug formation event 904. Additionally, the variable relationship 910 includes, but is not limited to, relative decrease 918, or the time during which the plug is removed and/or mitigated within the round baler. The variable relationship 910 is illustrated as a non-idealized representation, showing the effects of noise from any of a plurality of sources, and is intended to be illustrative.

As shown in FIG. 9B, the variable relationship 920 illustrates a change in a rotational speed of one or more components (such as the crop pickup device 102, 202, the drive system 150, and/or the belt drive system 158, 258) of a round baler (such as, but not limited to, the round baler 100, 200). The variable relationship 920 may include, but is not limited to, relative stability 924, the time during which crop material is introduced into the baler to begin forming a bale up to the plug formation event 904, a decrease to substantially zero rotations per minute 926 is observed following the plug formation event 904, and an increase to relative stability 928, the time during which the baler recovers following manual process for removal of the crop material plug. The variable relationship 920 is illustrated as a non-idealized representation, showing the effects of noise from any of a plurality of sources, and is intended to be illustrative.

As shown in FIG. 9C, the variable relationship 930 illustrates the hydraulic pressure within the belt tightener actuator, which affects the belt tension of bale forming belts (such as, but not limited to, the one or more bale forming belts 120, 220) of a round baler (such as, but not limited to, the round baler 100, 200). The variable relationship 930 may include, but is not limited to, a substantially zero pressure 932, the time during which crop material is introduced into the baler to begin forming a bale, a gradual pressure increase 934, the time during which the crop is fed into the baler up to the plug formation event 904, a sustained high pressure 936, following the plug formation event 904, a rapid decrease 938, the time during which a manual process for removal of a crop material plug occurs, and an increase in pressure to a secondary sustained high pressure 939, the time during which the baler recovers following the manual removal of the crop material plug. The variable relationship 930 is illustrated as a non-idealized representation, showing the effects of noise from any of a plurality of sources, and is intended to be illustrative.

As shown in FIG. 9D, the variable relationship 940 illustrates a change in a commanded pressure to the belt tightener actuator valve to affect the belt tension of bale forming belts (such as, but not limited to, the one or more bale forming belts 120, 220) of a round baler (such as, but not limited to, the round baler 100, 200). The variable relationship 940 may include, but is not limited to, a sustained commanded pressure 942, the time during which crop material is introduced into the baler to begin forming a bale, a stepped increase 944, the time during which the crop is fed into the baler up to the plug formation event 904, a sustained high commanded tension 946, following the plug formation event 904, a rapid decrease 948, the time during which the commanded pressure was manually reduced (i.e., by the operator manually pressing a button or control to reduce the pressure command, with the example in FIG. 9D showing that the operator had to manually reduce the pressure command twice, as evident by two drops in the commanded belt tightener actuator pressure during time range 948) for removal of a crop material plug, and a secondary sustained high commanded tension 949, the time during which the baler recovers following the manual removal of the crop material plug. The variable relationship 940 is illustrated as a non-idealized representation, showing the effects of noise from any of a plurality of sources, and is intended to be illustrative.

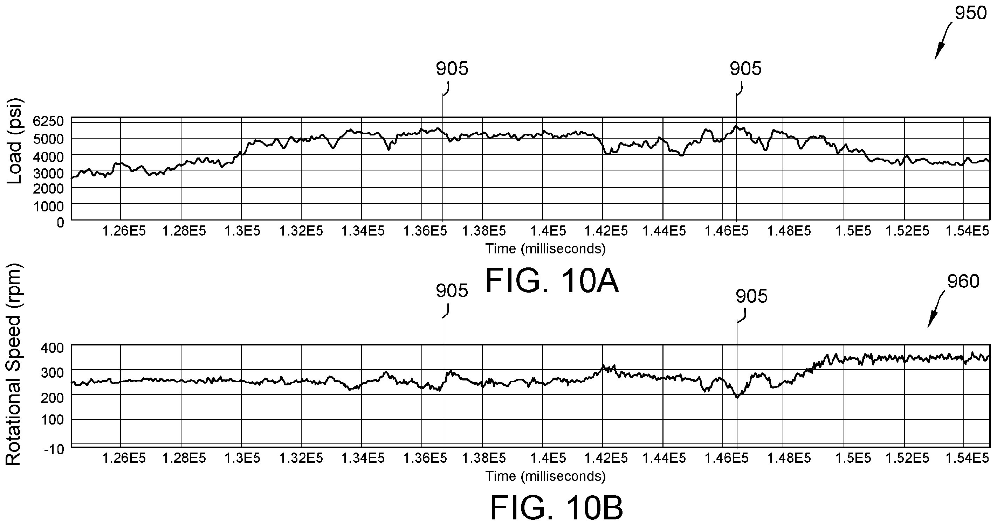

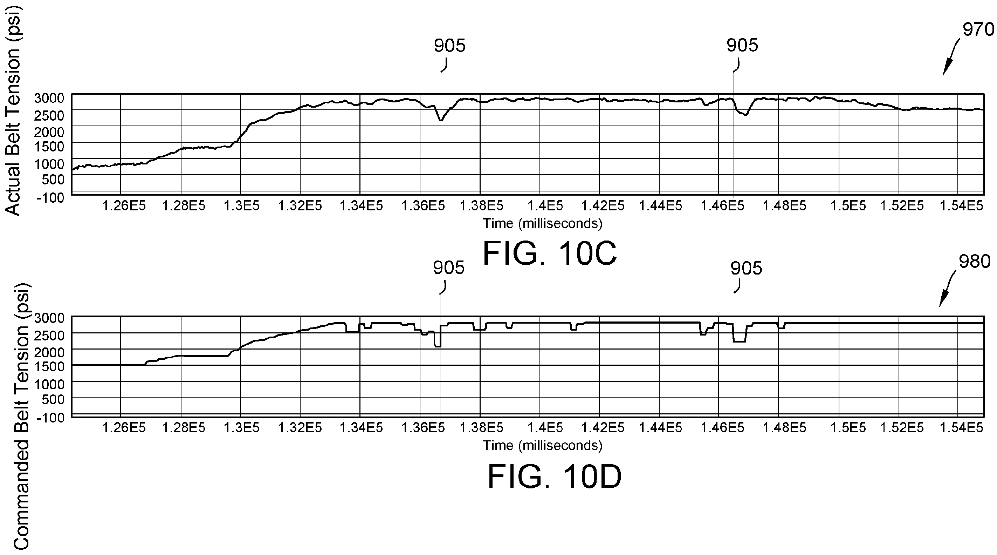

FIGS. 10A-10D are graphical representations of variable relationships illustrating operation parameters of a round baler including a control system (such as, but not limited to, the control system 148, 248) to adjust the tension of one or more bale forming belts (such as, but not limited to, the bale forming bels 120, 220) based on received sensor data to avoid a crop material plug from forming. That is, FIGS. 10A-10D are graphical representations of operation parameters of a round baler that includes dynamic control of the tension of the bale forming belts to avoid a crop material plug from forming. The variable relationships of FIGS. 10A-10D, including variable relationships 950 (shown in FIG. 10A), 960 (shown in FIG. 10B), 970 (shown in FIG. 10C), and 980 (shown in FIG. 10D), are graphical representations of different operation parameters of a round baler during the same period of time. That is, variable relationships 950, 960, 970, 980 occur over the same period of time, with the potential plug formation events and belt tension release events 905 dynamically occurring at the same time for each variable relationship to avoid the formation of a plug during the bale formation process and/or during operation of the round baler. Distinct from conventional round balers (e.g., baler corresponding to FIGS. 9A-9D), round balers associated with graphical representations of FIGS. 10A-10D utilizes sensors and/or processes sensor data relating to operational parameters of the round baler to predict a potential plug formation event, independent of bale size. As discussed herein, this allows systems of the round baler to dynamically achieve belt tension release events 905 prior to the plug formation event even occurring during operation of the round baler.

The variable relationships shown in FIGS. 10A-10D each include a pair of belt tension release events 905 as the control system of the round baler dynamically controls the tension of the bale forming belts to avoid a crop material plug from forming. It is to be understood that multiple other belt tension release events are evident in FIG. 10D (e.g., similar steps down), but only two belt tension release events are referenced in this example for the sake of brevity and clarity. As compared to FIGS. 9A-9D, FIGS. 10A-10D illustrate increased stability over time for each variable relationship as the control system dynamically controls the tension of the bale forming belts.

As shown in FIG. 10A, the variable relationship 950 illustrates a change in hydraulic pressure on a drive system component due to a load on a round baler (such as, but not limited to, the round baler 100, 200). The variable relationship 950 may include, but is not limited to, an increase in the load on the round baler, i.e., a potential plug formation event, during the time directly prior to each identified belt tension release event 905 (as evident by the drop in commanded belt tightener actuator hydraulic pressure at the corresponding time in FIG. 10D), leading to the control system reducing the belt tension to prevent a potential plug of crop material. As shown in FIG. 10B, the variable relationship 960 illustrates a change in a rotational speed of one or more components (such as the crop pickup device 102, 202, the drive system 150, and/or the belt drive system 158, 258) of a round baler (such as, but not limited to, the round baler 100, 200). The variable relationship 960 may include, but is not limited to, a decrease in the rotational speed during the time directly prior to each identified belt tension release event 905, leading to the control system reducing the belt tension to prevent a potential plug of crop material. The variable relationships 950, 960 are illustrated as non-idealized representations, showing the effects of noise from any of a plurality of sources, and are intended to be illustrative.

As shown in FIG. 10C, the variable relationship 970 illustrates a change in hydraulic pressure of a belt tightener actuator, which affects the belt tension of bale forming belts (such as, but not limited to, the one or more bale forming belts 120, 220) of a round baler (such as, but not limited to, the round baler 100, 200). The variable relationship 970 may include, but is not limited to, a decrease in the hydraulic pressure of a belt tightener actuator at each identified belt tension release event 905, resulting from the control system reducing the belt tension to prevent a potential plug of crop material. As shown in FIG. 10D, the variable relationship 980 illustrates a change in a commanded hydraulic pressure of the belt tightener actuator in response to an observed parameter, such as those shown in FIGS. 10A and/or 10B, of an increase in drive system pressure beyond a threshold and/or a decrease in speed beyond a threshold correlating to a belt tension release event 905. The variable relationship 980 may include, but is not limited to, a decrease in the commanded hydraulic pressure of a belt tightener actuator at each identified belt tension release event 905, resulting from the control system reducing the belt tension to prevent a potential plug of crop material. The variable relationships 970, 980 are illustrated as non-idealized representations, showing the effects of noise from any of a plurality of sources, and are intended to be illustrative. The system and method of the present disclosure enables dynamically modifying the tension in one or more belts that define the bale forming chamber. It should be understood that the tension increasing/decreasing is not a single event that occurs at a single point in time during bale formation. The event may occur over a range of time when threshold conditions are met. Contrasting the graphical presentations in Figures 10C where the dynamic belt tensioning system of the present disclosure is used with the baler and FIG. 9C where the system is not used, it is apparent that by dynamically modifying the tension in the baler during operation, the overload conditions and manual release and reapplication of hydraulic pressure of the belt tightener actuator shown in Fig. 9C are avoided (see, operating period 948 in FIG. 9C).

The following clauses further define particular aspects and embodiments of the present disclosure:
Clause 1. A round baler for forming round bales of a crop material, the round baler including: a crop pickup device; a plurality of rollers including at least one drive roller; one or more bale forming belts contacting the plurality of rollers, the one or more bale forming belts and the plurality of rollers defining a bale formation chamber, wherein the crop pickup device directs the crop material through a crop inlet and into the bale formation chamber to form the round bale of the crop material; a drive system including: a component configured to move the crop pickup device, and a belt drive system to move the at least one drive roller and thereby move the one or more bale forming belts; a belt tightener system for modifying tension in the one or more bale forming belts; one or more sensors for monitoring a parameter indicative of a load on the drive system; and a control system that controls operation of the belt tightener system based on load data received from the one or more sensors, the control system including a controller configured to dynamically control the belt tightener system to modify the tension in one or more bale forming belts during operation in response to the data received from the one or more sensors to thereby prevent a plug formation event from occurring.
Clause 2. The round baler as set forth in clause 1, wherein belt tightener system is dynamically controlled when a tailgate on the round baler is closed.
Clause 3. The round baler as set forth in clauses 1 or 2, wherein the controller of the control system is configured to dynamically control the belt tightener system while the belt drive system is rotating.
Clause 4. The round baler as set forth in clauses 1 to 3, wherein the one or more sensors includes at least one of one or more speed sensors, one or more torque sensors, or one or more pressure sensors.
Clause 5. The round baler as set forth in clause 4, wherein: in response to speed sensor data detected by the one or more speed sensor indicates an operating speed of the one or more bale forming belts is below a defined threshold operating range and indicative of the plug formation event, the controller of the control system is configured to control the belt tightener system to decrease the tension in the one or more bale forming belts; and in response to the speed sensor data indicates that the operating speed of the one or more bale forming belts has increased to a distinct operating speed that is within the defined threshold operating range, the controller of the control system is configured to control the belt tightener system to increase the tension in the one or more bale forming belts.
Clause 6. The round baler as set forth in clause 4, wherein in response to torque sensor data detected by the one or more torque sensor indicates an operating torque on the drive system is above a defined threshold operating range and indicative of the plug formation event occurring, the controller of the control system is configured to control the belt tightener system to decrease the tension in the one or more bale forming belts.
Clause 7. The round baler as set forth in clause 4, wherein in response to pressure sensor data detected by the one or more pressure sensor indicates an operating pressure on the drive system is above a defined threshold operating range and indicative of the plug formation event occurring, the controller of the control system is configured to control the belt tightener system to decrease the tension in the one or more bale forming belts.
Clause 8. The round baler as set forth in clauses 1 to 7, wherein the round baler maintains a continuous ground speed when the controller of the control system dynamically controls the belt tightener system to modify the tension in one or more bale forming belts.
Clause 9. The round baler as set forth in clauses 1 to 8, wherein the one or more bale forming belts are continuously operated when the controller of the control system dynamically controls the belt tightening system to modify the tension in one or more bale forming belts.
Clause 10. The round baler as set forth in clauses 1 to 9, wherein the drive system further includes a crop feeding device, and the one or more sensors are configured to monitor the load on the crop feeding device.
Clause 11. A round baler for forming round bales of a crop material, the round baler including: a crop pickup device; one or more rollers and one or more bale forming belts, the one or more rollers and the one or more bale forming belts defining a bale formation chamber, wherein the crop pickup device directs crop material through a crop inlet and into the bale formation chamber to form the round bale of crop material; one or more sensors for monitoring operation of the round baler, the one or more sensors selected from the group consisting of speed sensors, torque sensors and pressure sensors; and a control system that controls operation of a belt tightener system including at least one of the one or more rollers based on data received from the one or more sensors, the control system including a controller configured to dynamically control the one or more bale forming belts to adjust tension during operation in response to the data received from the one or more sensors to thereby prevent a plug formation event from occurring.
Clause 12. The round baler as set forth in clause 11, wherein: the one or more speed sensors are located proximate at least one of the bale formation chamber, the one or more bale forming belts, the one or more rollers, or the crop pickup device, the one or more torque sensors are located proximate at least one of the one or more rollers, or the crop pickup device, and the one or more pressure sensors are located proximate at least one of the one or more rollers, or the crop pickup device.
Clause 13. The round baler as set forth in clauses 11 or 12, further including a drive system that is configured to power at least one of the crop pickup device, or the one or more bale forming belts, wherein the one or more speed sensors, torque sensors, or pressure sensors are located proximate the drive system.
Clause 14. A method for preventing a plug formation event from occurring in a round baler, the method includes: directing crop material through a crop inlet of the round baler, into a bale formation chamber, the round baler including: a crop pickup device; one or more rollers and one or more bale forming belts, the one or more rollers and the one or more bale forming belts defining the bale formation chamber; a belt tightener system configured to adjust a tension on the one or more bale forming belts; one or more sensors for monitoring operation of the round baler; and a control system that controls the tensions of the one or more bale forming belts of the round baler based on data received from the one or more sensors; and in response to determining the received data from the one or more sensors is outside a predetermined threshold value, dynamically modifying, via a controller of the control system, the tension in the one or more bale forming belts to prevent the plug formation event from occurring.
Clause 15. The method as set forth in clause 14, further including: sensing an operating speed of at least one of (i) the one or more rollers, (ii) the one or more bale forming belts, or (iii) the crop pickup device of the round baler; in response to the sensed speed being below a predetermined speed threshold value, dynamically controlling the belt tightener system, via the controller of the control system for the round baler, to decrease the tension in one or more bale forming belts; and in response to the sensed speed being equal to or above the predetermined speed threshold value, dynamically controlling the belt tightener system, via the controller of the control system for the round baler, to increase the tension in the one or more bale forming belts.
Clause 16. The method as set forth in clauses 14 or 15, further including: sensing at least one of a torque load or a pressure experienced by a drive system of the round baler, the drive system configured to power at least one of the crop pickup device, or the one or more bale forming belts; in response to the sensed torque load exceeding a predetermined torque threshold value, dynamically controlling the belt tightener system, via the controller of the control system of the round baler, to decrease the tension in the one or more bale forming belts; and in response to the sensed pressure exceeding a predetermined threshold pressure value, dynamically controlling the belt tightener system, via the controller of the control system for the round baler, to decrease the tension in the one or more bale forming belts.
Clause 17. The method as set forth in clauses 14 to 16, wherein the dynamically modifying of the tension in the one or more bale forming belts occurs in response to a tailgate of the round baler being closed.
Clause 18. The method as set forth in clauses 14 to 17, further including maintaining a continuous ground speed of the round baler in response to the dynamically modifying of the tension in the one or more bale forming belts.
Clause 19. The method as set forth in clauses 14 to 18, further including continuously moving the one or more bale forming belts in response to the dynamically modifying of the tension in the one or more bale forming belts.
Clause 20. The method as set forth in clauses 14 to 19, wherein the dynamically modifying of the tension in the one or more bale forming belts is independent of interaction from a baler operator during operation.

This written description uses examples to disclose the invention, including the best mode and to enable a person of ordinary skill in the relevant art to make and practice the invention, including making and using any devices or systems and performing any incorporated methods. The patentable scope of the invention is defined by the claims. Such other examples are within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application.

## Claims

1. A round baler for forming round bales of a crop material, the round baler comprising:
a crop pickup device;
a plurality of rollers including at least one drive roller;
one or more bale forming belts contacting the plurality of rollers, the one or more bale forming belts and the plurality of rollers defining a bale formation chamber,
wherein the crop pickup device directs the crop material through a crop inlet and into the bale formation chamber to form the round bale of the crop material;
a drive system including:
a component configured to move the crop pickup device, and
a belt drive system to move the at least one drive roller and thereby move the one or more bale forming belts;
a belt tightener system for modifying tension in the one or more bale forming belts;
one or more sensors for monitoring a parameter indicative of a load on the drive system; and
a control system that controls operation of the belt tightener system based on load data received from the one or more sensors, the control system comprising a controller configured to dynamically control the belt tightener system to modify the tension in one or more bale forming belts during operation in response to the data received from the one or more sensors to thereby prevent a plug formation event from occurring.

2. The round baler as claimed in claim 1, wherein belt tightener system is dynamically controlled when a tailgate on the round baler is closed.

3. The round baler as claimed in claims 1 or 2, wherein the controller of the control system is configured to dynamically control the belt tightener system while the belt drive system is rotating.

4. The round baler as claimed in claims 1 to 3, wherein the one or more sensors comprise at least one of one or more speed sensors, one or more torque sensors, or one or more pressure sensors.

5. The round baler as claimed in claim 4, wherein:
in response to speed sensor data detected by the one or more speed sensor indicates an operating speed of the one or more bale forming belts is below a defined threshold operating range and indicative of the plug formation event, the controller of the control system is configured to control the belt tightener system to decrease the tension in the one or more bale forming belts; and
in response to the speed sensor data indicates that the operating speed of the one or more bale forming belts has increased to a distinct operating speed that is within the defined threshold operating range, the controller of the control system is configured to control the belt tightener system to increase the tension in the one or more bale forming belts.

6. The round baler as claimed in claim 4, wherein in response to torque sensor data detected by the one or more torque sensor indicates an operating torque on the drive system is above a defined threshold operating range and indicative of the plug formation event occurring, the controller of the control system is configured to control the belt tightener system to decrease the tension in the one or more bale forming belts.

7. The round baler as claimed in claim 4, wherein in response to pressure sensor data detected by the one or more pressure sensor indicates an operating pressure on the drive system is above a defined threshold operating range and indicative of the plug formation event occurring, the controller of the control system is configured to control the belt tightener system to decrease the tension in the one or more bale forming belts.

8. The round baler as claimed in claims 1 to 7, wherein the round baler maintains a continuous ground speed when the controller of the control system dynamically controls the belt tightener system to modify the tension in one or more bale forming belts.

9. The round baler as claimed in claims 1 to 8, wherein the one or more bale forming belts are continuously operated when the controller of the control system dynamically controls the belt tightening system to modify the tension in one or more bale forming belts.

10. A method for preventing a plug formation event from occurring in a round baler, the method comprises:
directing crop material through a crop inlet of the round baler, into a bale formation chamber, the round baler including:
a crop pickup device;
one or more rollers and one or more bale forming belts, the one or more rollers and the one or more bale forming belts defining the bale formation chamber;
a belt tightener system configured to adjust a tension on the one or more bale forming belts;
one or more sensors for monitoring operation of the round baler; and
a control system that controls the tensions of the one or more bale forming belts of the round baler based on data received from the one or more sensors; and
in response to determining the received data from the one or more sensors is outside a predetermined threshold value, dynamically modifying, via a controller of the control system, the tension in the one or more bale forming belts to prevent the plug formation event from occurring.

11. The method as claimed in claim 10, further comprising:
sensing at least one of a torque load or a pressure experienced by a drive system of the round baler, the drive system configured to power at least one of the crop pickup device, or the one or more bale forming belts;
in response to the sensed torque load exceeding a predetermined torque threshold value, dynamically controlling the belt tightener system, via the controller of the control system of the round baler, to decrease the tension in the one or more bale forming belts; and
in response to the sensed pressure exceeding a predetermined threshold pressure value, dynamically controlling the belt tightener system, via the controller of the control system for the round baler, to decrease the tension in the one or more bale forming belts.

12. The method as claimed in claims 10 or 11, wherein the dynamically modifying of the tension in the one or more bale forming belts occurs in response to a tailgate of the round baler being closed.

13. The method as claimed in claims 10 to 12, further comprising maintaining a continuous ground speed of the round baler in response to the dynamically modifying of the tension in the one or more bale forming belts.

14. The method as claimed in claims 10 to 13, further comprising continuously moving the one or more bale forming belts in response to the dynamically modifying of the tension in the one or more bale forming belts.

15. The method as claimed in claims 10 to 14, wherein the dynamically modifying of the tension in the one or more bale forming belts is independent of interaction from a baler operator during operation.
